# EUROPÄISCHE PATENTSCHRIFT

(11) **EP 0 462 394 B1**
(45) Veröffentlichungstag und Bekanntmachung des Hinweises auf die Patenterteilung: **08.03.1995**
(21) Anmeldenummer: 91107698.2
(22) Anmeldetag: 13.05.1991
(51) Int. Cl.: F16C 7/02, F16C 7/00

(54) **Verbindungselement, insbesondere Fahrzeugstrebe, und Verfahren zur Herstellung**
Connecting element, in particular connecting rod, and method of manufacturing same
Elément de liaison, en particulier bielle, et son procédé de fabrication

(30) Priorität: 16.06.1990 DE 4019270
(43) Veröffentlichungstag der Anmeldung: 27.12.1991
(73) Patentinhaber: VAW Aluminium AG, D-53117 Bonn (DE)
(72) Erfinder: Söllner, Gerhardt, W-5205 St. Augustin 1 (DE)
(74) Vertreter: Müller-Wolff, Thomas, Dipl.-Ing.

(56) Entgegenhaltungen:
- EP-A- 0 013 648
- FR-A- 494 623
- FR-A- 1 531 619
- FR-A- 2 077 485
- FR-A- 2 385 935
- GB-A- 129 926
- GB-A- 2 053 766
- GB-A- 2 165 912
- PATENT ABSTRACTS OF JAPAN, Band 9, Nr. 179 (M-399)[1902], 24. Juli 1985;& JP-A-60 49 115 (TOYOTA JIDOSHA K.K.) 18-03-1985
- PATENT ABSTRACTS OF JAPAN, Band 9, Nr. 215 (M-409)[1938], 3. September 1985;& JP-A-60 76 409 (TOYOTA JIDOSHA K.K.) 30-04-1985

## Beschreibung

Die Erfindung betrifft ein Verbindungselement, insbesondere Fahrzeugstrebe mit beidends angeordneten Augen zur Aufnahme von Gelenken, Lagern oder Befestigungselementen, wobei das Verbindungselement aus einem Rohr besteht, an dessen Enden die Rohrwandungen spitz zulaufen und in Zungenenden die mit je einem Auge versehen sind, dessen Achse senkrecht zur Zungenebene verläuft. Die Erfindung betrifft weiterhin ein Verfahren zu dessen Herstellung.

Ein Verbindungselement der eingangs genannten Art ist aus der GB-A-129 926 bekannt. Dabei werden augenförmige Verbindungsteile an den Zungen angeschweißt, wobei die angeschweißten Teile aus Guß- oder Schmiedeteilen bestehen und ein vergleichweise hohes Gewicht aufweisen. Die Herstellung ist aufwendig und kostspielig. Zudem sind meistens spannende Nachbearbeitungen erforderlich.

Im Fahrzeugbau, bei dem derartige Verbindungselemente vornehmlich als Streben Verwendung finden, sind insbesondere Gewichtseinsparungen sowie einfache, kostengünstige Herstellungsverfahren von besonderer Bedeutung. Gleichzeitig müssen hohe Festigkeitsanforderungen erfüllt werden. Verbindungselemente aus Blechformteilen sind zwar leicht, die Herstellung erfordert aber hohe Werkzeugkosten und zusätzliche Schweißarbeiten.

Aufgabe der vorliegenden Erfindung ist es daher, ein Verbindungselement, insbesondere eine Fahrzeugstrebe, zu entwickeln, das leicht und verwindungssteif ist und zudem kostengünstig herstellbar ist. Eine weitere Aufgabe ist es, ein Verfahren anzugeben, mit dem ein derartiges Verbindungselement durch ein fache Verformungsschritte hergestellt werden kann, ohne Anwendung komplizierter Werkzeuge und ohne eine aufwendige Nachbearbeitung.

Diese Aufgabe wird erfindungsgemäß durch die im Anspruch 1 und Anspruch 7 angegebenen Merkmale gelöst.

Ein Verfahren zur Herstellung des erfindungsgemäßen Verbindungselementes geht aus von einem Rohr bzw. einem rohrähnlichen Profil, das an den Rohrenden zunächst abgeplattet wird, so daß die Rohrwandungen vom unverformten Bereich aus spitz aufeinander zulaufen und zu den Enden hin in flache Zungen übergehen.

In diese Zungen werden anschliessend die Augen durch Fließbohren eingeformt. Dabei wird das Material nicht entfernt, sondern durch einen sich drehenden Bolzen auseinandergepreßt. Dadurch entstehen Augen mit massiven Wandungen, die wulstartig aus den Zungen herausragen. Die Wandungen müssen einen festen Halt der aufzunehmenden Gelenke, Lager oder Befestigungselemente gewährleisten. Dazu ist eine ausreichende Wandstärke erforderlich. Steht zur Ausbildung der Augenwandungen zu wenig Material zur Verfügung, z.B. beim Einsatz sehr dünnwandiger Rohre, können die folgenden Maßnahmen Abhilfe schaffen.

Zum einen kann nach der Abplattung der Rohrenden der äußere Teil der Zungen um 180 Grad zurückgebogen werden, so daß die Materialdicke im Augenbereich der vierfachen Rohrwandstärke entspricht. Zum anderen können vor der Abplattung Materialblöcke in die Endbereiche des Rohres eingelegt werden. Die Blöcke können einen beliebigen Querschnitt aufweisen. Sie sollten vorzugsweise aus einem Material bestehen, das unter den Verformungsbedingungen bzw. bei Anwendung erhöhter Temperatur mit dem Rohrmaterial fest verschweißt. Die Verformungseigenschaften sollten dabei denen des Rohrmaterials in etwa entsprechen. Eine weitere Möglichkeit zur Bereitstellung des für die Herausarbeitung der Augen erforderlichen Materials ist die Verwendung von Rohren, deren Innendurchmesser zu den Rohrenden hin abnimmt, bei gleichbleibendem Außendurchmesser. Derartige Rohre werden handelsüblich als "butted tubes" bezeichnet und finden z.B. Verwendung bei der Herstellung von Rahmen für Rennräder. Die angeführten Maßnahmen können falls erforderlich auch kombiniert werden. In jedem Fall wird auch bei leichten, dünnwandigen Rohren eine ausreichende Materialmenge gewährleistet.

Zur Erhöhung der Verwindungssteifigkeit des Verbindungselementes kann im Bereich der verformten Rohrenden eine Versteifungswulst eingeformt werden. Diese ist vorzugsweise gabelförmig an den Außenseiten der Zungen angeordnet. Die Einformung der Versteifungswulst kann durch ein entsprechend ausgebildetes Werkzeug gleichzeitig mit der Abplattung der Rohrenden erfolgen.

Entsprechend den Konstruktionsanforderungen können die einander gegenüberliegenden Zungen bei der Abplattung der Rohrenden so eingeformt werden, daß die Zungenebenen in einem beliebigen Winkel, bezogen auf die Rohrachse, gegeneinander gedreht sind. Falls erforderlich, kann auch das Rohr selbst beliebig gebogen werden. Dies sollte vorzugsweise vor der Bearbeitung der Rohrenden erfolgen.

Zur Erleichterung der Formgebung und um das Auftreten von Rissen auszuschließen kann es je nach Umformbarkeit der eingesetzten Werkstoffe vorteilhaft sein, die Verformungsschritte bei erhöhten Temperaturen durchzuführen.

Eine Verbesserung der Festigkeit bzw. Stabilität des erfindungsgemäßen Verbindngselementes kann erreicht werden durch Beschichtung der Rohrinnenwandungen mit einer haftvermittelnden Schicht, z.B. einem Klebstoff. Diese bewirkt eine feste Verbindung der im Zungenbereich aneinanderliegenden Rohrwandungen. Gleichzeitig werden unvermeidbare Hohlräume in diesem Bereich abgedichtet und so eine Spaltkorrosion wirksam verhindert.

In bevorzugter Ausführungsform des erfindungsgemäßen Verbindungselementes werden Rohre aus metallischen Werkstoffen verwendet. Besonders geeignet sind dabei Werkstoffe mit guter Kaltumformbarkeit, wie z.B. Aluminium, Kupfer, Titan, Eisen (Stahl) oder deren Legierungen. Auch geschweißte oder gelötete Rohre können eingesetzt werden, wenn saubere Schweißnähte bzw. Lötstellen vorliegen und der Bereich der Schweißnähte bzw. Lötstellen in gleichem Maße verformbar ist wie das eigentliche Rohrmaterial.

Bei Wahl eines metallischen Werkstoffes kann anstelle einer Klebstoffbeschichtung auch eine Beschichtung mit einem auf den Rohrwerkstoff abgestimmten Lotmaterial auf die Rohrinnenwandungen (zumindest in den Endbereichen) aufgebracht werden. Durch die Verformungswärme oder auch durch Anwendung erhöhter Temperatur bei der Verformung erfolgt eine feste Verlötung bzw. Verschweißung der Rohrwandungen im Zungenbereich. Dadurch wird die Verwindungssteifigkeit des Befestigungselementes erhöht. Gleichzeitig wird auch in diesem Fall eine Spaltkorrosion verhindert durch Ausfüllen bzw. Abdichten der Hohlräume mit dem Lotmaterial.

In Anwendungsfällen mit geringeren Anforderungen an die Festigkeit bzw. Stabilität des Verbindungselementes können auch Rohre aus einem Kunststoffmaterial verwendet werden. Vorzuziehen sind hier Thermoplaste, die unter Wärmeeinwirkung erweichen und so eine leichte Umformung ermöglichen. Gleichzeitig ist eine Verschweißung der abgeplatteten Rohrwandungen gewährleistet. Bei höheren Festigkeitsanforderungen sollten verstärkte, insbesondere faserverstärkte Thermoplaste eingesetzt werden.

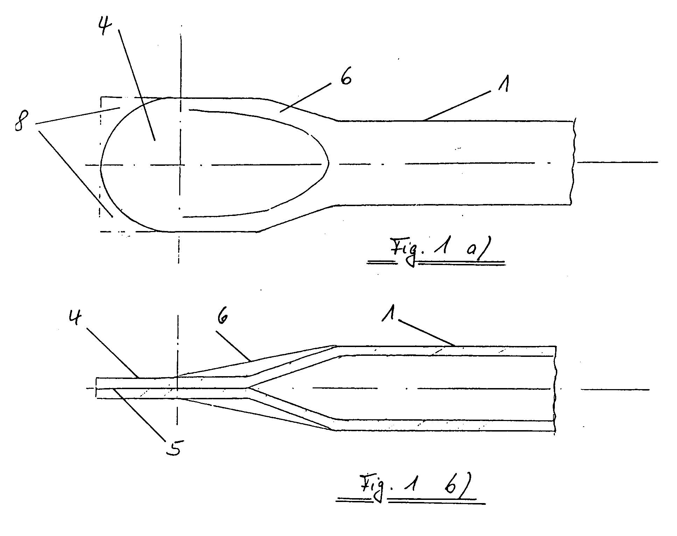

Nachfolgend wird die Erfindung anhand von Skizzen beispielhaft erläutert. Die Figuren 1 bis 3 zeigen nicht die erfindungsgemäß erforderliche Abwinklung des äußeren Teils der Zunge. Sie dienen nur zur Erläuterung der übrigen Merkmale und decken sich insoweit nicht mit dem Wortlaut der Patentansprüche.
- Figur 1: Teilansicht des Verbindungselementes vor der Einformung der Augen [a) Aufsicht, b) Querschnitt]
- Figur 2: Verbindungselement mit parallelem Verlauf der Augenachsen [a) Aufsicht, b) Querschnitt]
- Figur 3: Verbindungselement mit rechtwinkligem Verlauf der Augenachsen [Teilschnitte]
- Figur 4: Verbindungselement mit abgewinkelter Zunge vor der Einformung der Augen [Teilansicht im Querschnitt]

Fig. 1 zeigt eine Teilansicht des Verbindungselementes vor der Einformung der Augen. Das Ende des Rohres 1 ist zu einer Zunge 4 abgeplattet. Im Übergang vom unverformten Bereich des Rohres 1 zur Zunge 4 ist beidseitig eine außenliegende Versteifungswulst 6 angeordnet. Die äußeren Enden 8 der Zunge 4 wurden rund abgestanzt. Der Spalt 5 zwischen den Rohrwandungen im Bereich der Zunge 4 kann beispielsweise mit einem Klebstoff oder einem Lotmaterial gefüllt sein.

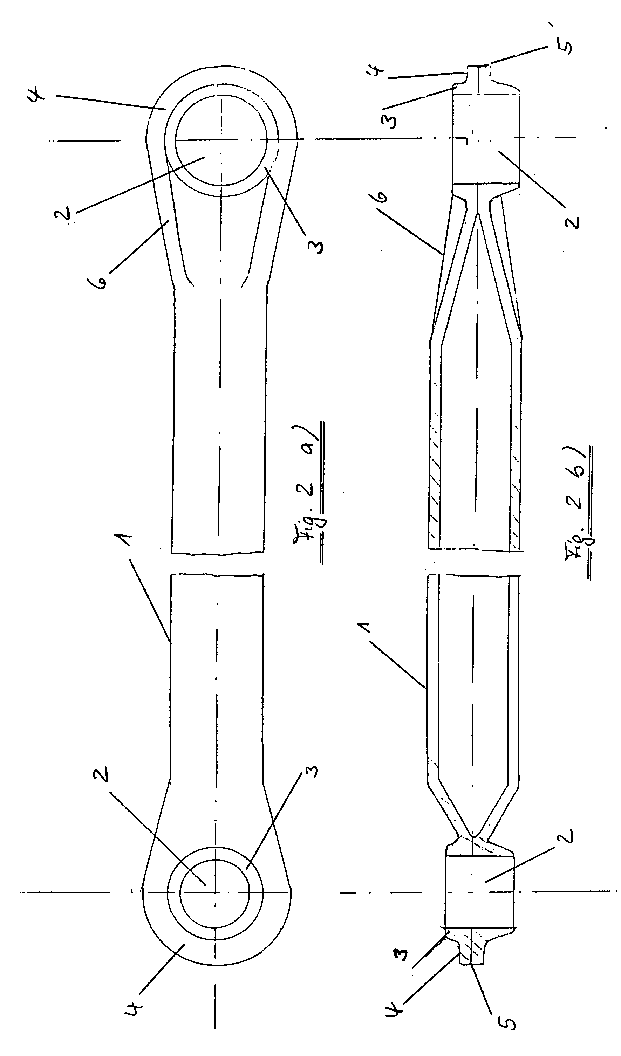

Fig. 2 zeigt eine mögliche Ausführungsform des fertigen Verbindungselementes. Die Augen 2 wurden durch Fließbohren in die Zungen 4 eingeformt. Die Augenwandungen 3 werden gebildet durch das dabei nach außen gepreßte Material. Die Achsen der Augen 2 verlaufen senkrecht zur Zungenebene. Die einander gegenüberliegenden Zungen 4 sind fluchtend angeordnet, dementsprechend verlaufen die Achsen der Augen 2 parallel zueinander.

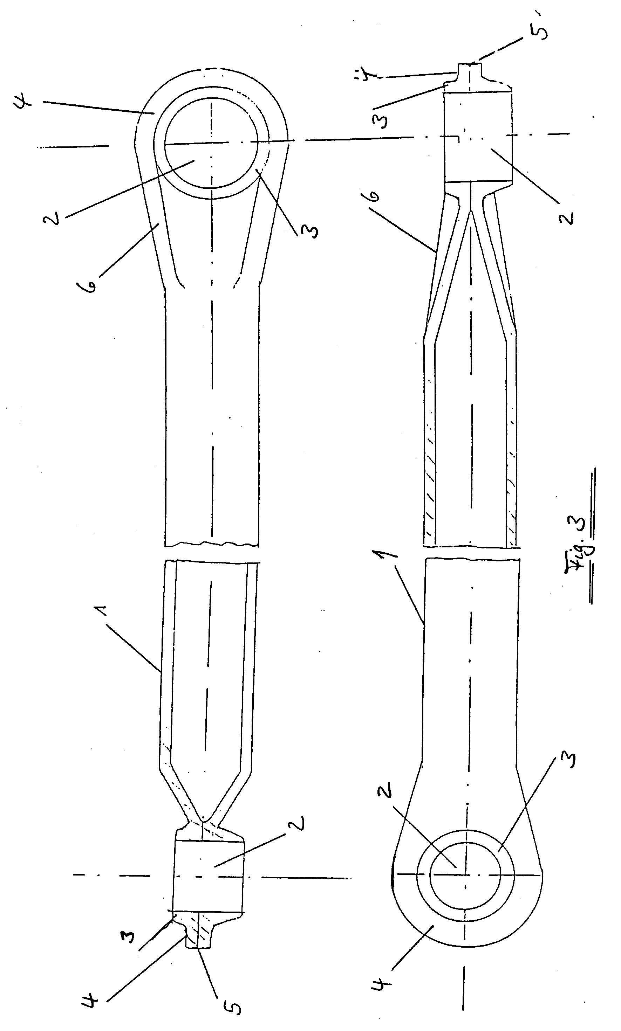

Fig. 3 zeigt eine weiter Ausführungsform des erfindungsgemäßen Verbindungselementes. Hier sind die beidends angeordneten Zungen 4 um einen Winkel von 90 Grad gegeneinander gedreht [bezogen auf die Achse des Verbindungselementes]. Die Achsen der Augen 2 verlaufen dementsprechend rechtwinklig zueinander. Der Winkel kann entsprechend den Konstruktionsanforderungen beliebig gewählt werden.

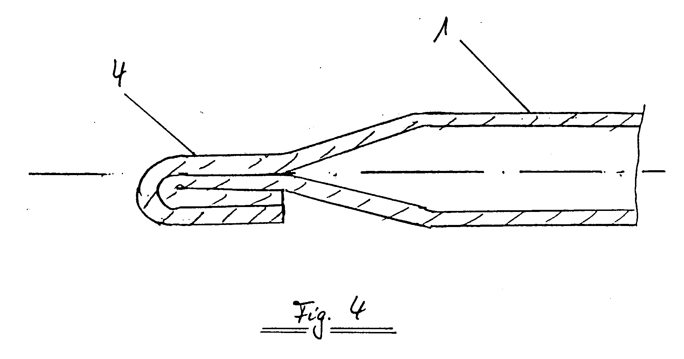

Fig. 4 zeigt den Endbereich einer weiteren Variante des Verbindungselementes im Querschnitt. Dargestellt ist der Zustand vor der Einformung der Augen. In diesem Fall ist der äußere Teil der Zunge 4 um 180 Grad zurückgebogen, so daß die Materialdicke hier etwa der vierfachen Wandstärke des Rohres 1 entspricht. Auf diese Weise wird gewährleistet, daß auch bei dünnwandigen Rohren eine ausreichende Materialmenge für die Einformung der Augen zur Verfügung steht.

Das erfindungsgemäße Verbindungselement ist leicht und stabil. Es wird aus einem preiswerten Massenprodukt (Rohr) hergestellt. Nach dem vorgeschlagenen Herstellverfahren sind ausschließlich einfache Umformungsschritte notwendig. Die Werkzeugkosten sind minimal. Das Verfahren ist dementsprechend einfach und kostengünstig.

## Patentansprüche

1. Verbindungselement, insbesondere Fahrzeugstrebe, mit beidends angeordneten Augen zur Aufnahme von Gelenken, Lagern oder Befestigungselementen, wobei das Verbindungselement aus einem an den Rohrenden abgeplatteten Rohr (1) besteht, dessen Rohrwandungen spitz zulaufen und in Zungen (4) enden, die mit je einem Auge (2) versehen sind, dessen Achse senkrecht zur Zungenebene verläuft,
dadurch gekennzeichnet,
daß der äußere Teil der Zunge (4) um 180° abgewinkelt ist und das Auge (2) mit massiven, wulstartigen Wandungen aus der Zunge herausragt.

2. Verbindungselement nach Anspruch 1,
dadurch gekennzeichnet,
daß die äußeren Enden der Zungen (4) abgerundet sind.

3. Verbindungselement nach einem der vorhergehenden Ansprüche,
dadurch gekennzeichnet,
daß im Übergang zwischen dem Rohr (1) und der Zunge (4) beidseitig eine außenliegende gabelförmige Versteifungswulst (6) angeordnet ist.

4. Verbindungselement nach einem der vorhergehenden Ansprüche,
dadurch gekennzeichnet,
daß die Zungen (4) so angeordnet sind, daß die Zungenebenen axial in einem beliebigen Winkel gegeneinander gedreht sind.

5. Verbindungselement nach einem der vorhergehenden Ansprüche,
dadurch gekennzeichnet,
daß das Rohr (1) gebogen ist.

6. Verbindungselement nach einem der vorhergehenden Ansprüche,
dadurch gekennzeichnet,
daß ein Spalt (5) zwischen den Rohrwandungen im Bereich der Zungen (4) mit einer haftvermittelnden Schicht oder mit einem Lotmaterial bzw. einem mit den Rohrwerkstoffen verschweißbaren Material ausgefüllt ist,

7. Verfahren zur Herstellung eines Verbindungselementes, insbesondere einer Fahrzeugstrebe mit beidends angeordneten Augen zur Aufnahme von Gelenken, Lagern oder Befestigungselementen, wobei das Verbindungselement aus einem Rohr (1) besteht, dessen Enden zu Zungen (4) abgeplattet werden,
dadurch gekennzeichnet,
daß in jede der Zungen (4) ein Auge (2) mit massiver Wandung durch Fließbohren eingeformt wird, und daß der äußere Teil der Zunge (4) vor der Einformung der Augen um 180 ° zurückgebogen wird.

8. Verfahren nach Anspruch 7,
dadurch gekennzeichnet,
daß die äußeren Ecken (8) der Zungen (4) rund abgestanzt werden.

9. Verfahren nach Anspruch 7 oder 8,
dadurch gekennzeichnet,
daß bei der Abplattung der Rohrenden beidseitig eine außenliegende Versteifungswulst (6) angeformt wird, die sich vom unverformten Bereich des Rohres (1) bis in die Zunge (4) erstreckt.

10. Verfahren nach einem der Ansprüche 7 bis 9,
dadurch gekennzeichnet,
daß die Abplattung der Rohrenden in einem beliebigen Winkel axial gegeneinander gedreht durchgeführt wird.

11. Verfahren nach einem der Ansprüche 7 bis 10,
dadurch gekennzeichnet,
daß das Rohr (1) vor der Abplattung der Enden gebogen wird.

12. Verfahren nach einem der Ansprüche 7 bis 11,
dadurch gekennzeichnet,
daß die Verformungsschritte bei erhöhter Temperatur durchgeführt werden.

13. Verfahren nach einem der Ansprüche 7 bis 12,
dadurch gekennzeichnet,
daß die Rohrenden vor der Abplattung innenseitig mit einer haftvermittelnden Schicht versehen werden.

14. Verfahren nach einem der Ansprüche 7 bis 13,
dadurch gekennzeichnet,
daß vor der Abplattung in die Rohrenden ein Material eingelegt wird, das mit dem Rohrwerkstoff verschweißbar ist.

15. Verfahren nach einem der Ansprüche 7 bis 14,
dadurch gekennzeichnet,
daß ein Rohr verwendet wird, dessen Wandstärke bei gleichbleibendem Außendurchmesser zu den Enden hin zunimmt.

16. Verfahren nach einem der Ansprüche 7 bis 15,
dadurch gekennzeichnet,
daß als Rohrmaterial ein metallischer Werkstoff verwendet wird.

17. Verfahren nach einem der Ansprüche 7 bis 16,
dadurch gekennzeichnet,
daß als metallischer Werkstoff Aluminium, Kupfer, Titan, Eisen oder deren Legierungen eingesetzt werden.

18. Verfahren nach Anspruch 16 oder 17,
dadurch gekennzeichnet,
daß die Innenseiten der Rohrenden vor der Abplattung mit einem Lotmaterial beschichtet werden.

19. Verfahren nach einem der Ansprüche 7 bis 16,
dadurch gekennzeichnet,
daß als Rohrmaterial ein Kunststoff, vorzugsweise ein Thermoplast, verwendet wird.

20. Verfahren nach Anspruch 19,
dadurch gekennzeichnet,
daß als Rohrmaterial ein verstärkter Kunststoff, vorzugsweise ein faserverstärkter Kunststoff eingesetzt wird.

## Claims

1. A connecting element, especially a vehicle strut, with eyes arranged at both ends for receiving joints, bearings or fixing elements, with the connecting element consisting of a tube (1) which is flattened at the tube ends and whose tube walls are tapered and end in tongues (4) which are each provided with an eye (2) whose axis extends perpendicularly to the tongue plane,
characterised in
that the outer part of the tongue (4) is bent by 180° and that the eye (2) projects from the tongue with solid, bead-like walls.

2. A connecting element according to claim 1,
characterised in
that the outer ends of the tongues (4) are rounded.

3. A connecting element according to any one of the preceding claims,
characterised in
that at the region of transition between the tube (1) and the tongue (4), at each end , there is arranged an outer yoke-like reinforcing bead (6).

4. A connecting element according to any one of the preceding claims,
characterised in
that the tongues (4) are arranged in such a way that the tongue planes are axially turned relative to one another at any angle.

5. A connecting element according to any one of the preceding claims,
characterised in
that the tube (1) is bent.

6. A connecting element according to any one of the preceding claims,
characterised in
that a gap (5) between the tube walls in the region of the tongues (4) is filled with an adhesion generating layer or with a soldering material or with a material which is suitable for being welded to the tube materials.

7. A process of producing a connecting element, especially a vehicle strut with eyes arranged at both ends for receiving joints, bearings or fixing elements, with the connecting element consisting of a tube (1) whose ends are flattened to form tongues (4),
characterised in
that an eye (2) with solid walls is formed into each tongue (4) by flow drilling and that, prior to forming in the eyes, the outer part of the tongue (4) is bent back by 180°.

8. A process according to claim 7,
characterised in
that the outer corners (8) of the tongues (4) are punched so as to become round.

9. A process according to claim 7 or 8,
characterised in
that when flattening the tube ends, an outer reinforcing bead is formed on at both ends, which bead extends from the undeformed region of the tube (1) into the tongue (4).

10. A process according to any one of claims 7 to 9,
characterised in
that the tube ends are flattened so as to be axially turned relative to one another at any angle.

11. A process according to any one of claims 7 to 10,
characterised in
that, prior to flattening the tube ends, the tube (1) is bent.

12. A process according to any one of claims 7 to 11,
characterised in
that the deformation operations take place at an increased temperature.

13. A process according to any one of claims 7 to 12,
characterised in
that, prior to being flattened, the tube ends, on their inner faces, are provided with an adhesion generating layer.

14. A process according to any one of claims 7 to 13,
characterised in
that, prior flattening the tube ends, a material which is suitable for being welded to the tube material is inserted into the tube ends.

15. A process according to any one of claims 7 to 14,
characterised in
that use is made of a tube whose wall thickness increases towards its ends while its outer diameter remains unchanged.

16. A process according to any one of claims 7 to 15,
characterised in
that a metallic material is used as the tube material.

17. A process according to any one of claims 7 to 16,
characterised in
that the metallic material is aluminium, copper, titanium, iron or any one of their alloys.

18. A process according to claims 16 or 17,
characterised in
that prior to flattening the tube ends, the inner faces of the tube ends are coated with a soldering material.

19. A process according to any one of claims 7 to 16,
characterised in
that the tube material is a plastic material, preferably a thermoplastic material.

20. A process according to claim 19,
characterised in
that the raw material consists of reinforced plastics, preferably fibre-reinforced plastics.

## Revendications

1. Élément de liaison, notamment jambe de force de véhicule, comprenant à chacune des extrémités un oeillet destiné à recevoir des articulations, des paliers ou des éléments de fixation, l'élément de liaison étant composé d'un tube (1) aplati aux extrémités dont les parois convergent de façon conique et se terminent par des languettes (4) munies d'un oeillet (2) dont l'axe s'étend perpendiculairement au plan des languettes, caractérisé en ce que la partie extérieure de la languette (4) est recourbée de 180° et l'oeillet (2) fait saillie de la languette avec des parois massives semblables à un bourrelet.

2. Élément de liaison selon la revendication 1, caractérisé en ce que les extrémités extérieures des languettes (4) sont arrondies.

3. Élément de liaison selon l'une des revendications précédentes, caractérisé en ce que, dans la transition entre le tube (1) et la languette (4), de chaque côté, est placé un bourrelet de renforcement (6) extérieur en forme de fourchette.

4. Élément de liaison selon l'une des revendications précédentes, caractérisé en ce que les languettes (4) sont disposées de telle manière que les plans des languettes sont tournés l'un par rapport à l'autre avec un angle quelconque dans la direction de l'axe.

5. Élément de liaison selon l'une des revendications précédentes, caractérisé en ce que le tube (1) est recourbé.

6. Élément de liaison selon l'une des revendications précédentes, caractérisé en ce qu'une fente (5) entre les parois du tube, dans la zone des languettes (4) est comblée par une couche d'agent adhésif ou par un matériau de brasage ou un matériau pouvant être soudé aux matériaux du tube.

7. Procédé pour fabriquer un élément de liaison, notamment une jambe de force de véhicule, comprenant à chacune des extrémités un oeillet destiné à recevoir des articulations, des paliers ou des éléments de fixation, l'élément de liaison étant composé d'un tube (1) dont les extrémités sont aplaties pour former des languettes (4), caractérisé en ce qu'un oeillet (2) à paroi massive est réalisé dans chacune des languettes (4) par perçage par fluage, et en ce que la partie extérieure de la languette (4) est recourbée vers l'arrière de 180° avant d'y réaliser les oeillets.

8. Procédé selon la revendication 7, caractérisé en ce que les angles extérieurs (8) des languettes (4) sont découpés à l'emporte-pièce avec une forme arrondie.

9. Procédé selon la revendication 7 ou 8, caractérisé en ce que, lors de l'aplatissement des extrémités du tube, un bourrelet de renforcement extérieur (6) est réalisé de part et d'autre, qui s'étend depuis la zone du tube (1) qui n'est pas déformée jusque dans la languette (4).

10. Procédé selon l'une des revendications 7 à 9, caractérisé en ce que les extrémités du tube sont aplaties en étant tournées l'une par rapport à l'autre avec un angle quelconque dans la direction de l'axe.

11. Procédé selon l'une des revendications 7 à 10, caractérisé en ce que le tube (1) est recourbe avant d'aplatir les extrémités.

12. Procédé selon l'une des revendications 7 à 11, caractérisé en ce que les étapes de formage se déroulent à une température élevée.

13. Procédé selon l'une des revendications 7 à 12, caractérisé en ce que les extrémités du tube sont munies à l'intérieur d'une couche d'agent adhésif avant d'être aplaties.

14. Procédé selon l'une des revendications 7 à 13, caractérisé en ce qu'un matériau pouvant être soudé au matériau du tube est inséré dans les extrémités du tube avant de les aplatir.

15. Procédé selon l'une des revendications 7 à 14, caractérisé en ce qu'on utilise un tube dont l'épaisseur des parois augmente en direction des extrémités tout en conservant le même diamètre extérieur.

16. Procédé selon l'une des revendication 7 à 15, caractérisé en ce que le matériau du tube est un matériau métallique.

17. Procédé selon l'une des revendications 7 à 16, caractérisé en ce qu'on utilise en tant que matériau métallique de l'aluminium, du cuivre, du titane, du fer ou leurs alliages.

18. Procédé selon la revendication 16 ou 17, caractérisé en ce que les faces internes des extrémités du tube sont recouvertes d'un matériau de brasage avant l'aplatissement.

19. Procédé selon l'une des revendications 7 à 16, caractérisé en ce que le matériau utilisé pour le tube est une matière plastique, de préférence un thermoplaste.

20. Procédé selon la revendication 19, caractérisé en ce que le matériau utilisé pour le tube est une matière plastique renforcée, de préférence une matière plastique renforcée aux fibres.
